# EUROPEAN PATENT APPLICATION

(11) **EP 2 743 791 A1**
(43) Date of publication of application: **18.06.2014**
(21) Application number: 13192908.5
(22) Date of filing: 14.11.2013
(51) Int. Cl.: G05D 23/19

(54) **Improved touch-control panel**

(30) Priority: 28.11.2012 IT PN20120036 U
(71) Applicant: Think Simple S.r.l., 20121 Milano (IT)
(72) Inventor: Vuan, Alberto, 33080 Roveredo in Piano (PN) (IT)
(74) Representative: Giugni, Valter

(57) **Abstract**

Control and command panel of the touch-control type associated with a regulating device and comprising an external surface whereon a plurality of distinct single sectors is defined wherein related control menus are placed: a first menu is formed by a first group of said distinct sector placed on a circular perimeter, a second menu formed by a second group of single icons placed outside said circular perimeter, whereby the icons are adjacent one to the other, separate from said first menu, and each of the icons is basically similar to first menu.

## Description

The present invention generally relates to a control and command device adapted to determine the control of a physical variable depending on another variable, and wherein both variables can be controlled selectively.

More specifically, the control device is meant to provide a particular device adapted to control, and selectively regulate, the temperature SET POINT of a place both:
- depending on the time of the day,
- and depending on the day of the week
when said SET POINT has to be regulated.

The skilled in the art will already have realized that in practice the invention generally relates to the field of thermostats associated with a conditioning/heating system, wherein the set temperature is not fixed, that is not modifiable until a new action, but it can be set in advance by the user both depending on the time of the day, and depending on the day of the week; moreover, such thermostats enable to combine in advance the desired settings for a given period.

Such thermostats are generally known as "chrono-thermostats".

Said chrono-thermostats are widely common and made according to the most effective, apt-to-date technologies, that is according to electronic technologies.

In fact, there are numerous examples of chrono-thermostats capable of carrying out the described functions by means of setting data and commands on a touch-control display or, more simply, of setting the same data and commands by pressing suitable keys or cursors placed on a single panel.

Such technique is disclosed in various patents, such as in US 7,556,207 B2; in this document it is disclosed a thermostat comprising a transparent and touch-sensitive membrane adapted to be affixed over a display device, wherein the same membrane has a plurality of electrical switches.

The thermostat comprises a microprocessor in communication with said switches and a memory for storing a program for controlling the operation of the climate control system.

The thermostat, moreover, comprises a display device, activated by the microprocessor, for displaying a first screen having at least a first icon, which can be activated by the user, associated with at least one of said switches where, in response to the user touching on the membrane switch associated with the interface icon, the display device displays a second screen having at least a run icon and a schedule icon.

Even if such solution is certainly useful, anyway the great number of data to be introduced on various points of the display device and necessity of having to memorize the setting procedure before starting it, make this solution little feasible and certainly a bit complicated for a not particularly skilled user.

From patents US 7,466,307 ---- US 7,969,330 ---- and from EP 2 314 928 it is known a position detector comprising a touch-control sensor shaped as a closed-loop crown, circular, adapted to detect the presence of an object in the proximity or a contact with a distinct and defined sector of said closed-loop.

Such solution is employed generally to modify the setting of the value, or values, of a variable which is desirable to control without interrupting the finger touching with said crown surface.

Such solutions are very easy because they are intuitive, and are also faster than the traditional "discrete" control solutions.

Anyway, such solutions do not provide for that the value of the variable set on that crown is combined with the value of another variable to be selected and, hence, assumed in combination with the operation of the first variable, and, therefore, said control type has a limited use.

Moreover, no known technique teaches how associate the contact position on said crown with the time progression or in general with a time interval, and, least of all, to associate a determined variable such as the temperature, or a lighting condition (type: ON-OFF), with a particular time interval, which can be indefinitely prolonged and, in particular, which can be prolonged for any entire week.

It should, therefore, be desirable, and it is the main object of the present invention, to provide a control panel comprising a graphical interface or a first menu whereon to set the values of a first variable in a continuous way and a second menu whereon to set the values of a second variable, wherein the activation of said second variable is regulated by the condition of said first variable, and in particular, wherein said first variable is a distinct or definable time interval or a plurality of time intervals, and wherein the second variable is a specified SET POINT condition of a determined apparatus or actuator.

Moreover such panel should be manageable in a simple, fast and particularly easy and intuitive way and the number of contacts or the user's finger touching on the panel itself have to be reduced to a minimum.

Such object is achieved by the type of panel made and operating according to the appended claims.

Characteristics and advantages of the invention will become apparent from the description provided hereinafter for exemplification only but not limited to, with reference to the appended drawings, wherein:

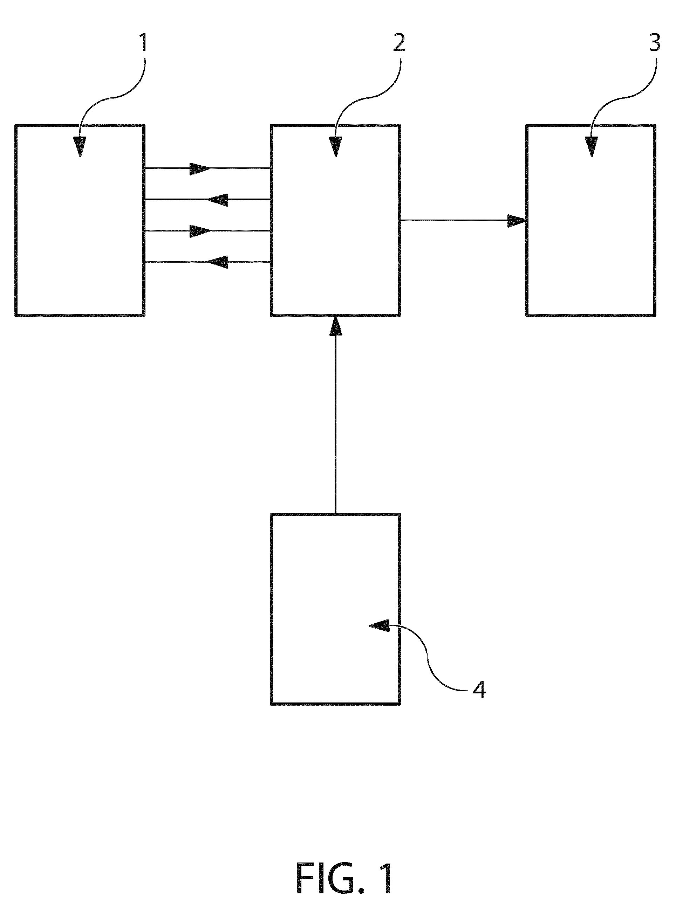

- Figure 1 shows a schematic and simplified illustration of a system for keeping and controlling a desired environmental condition comprising a control panel according to the invention,
- Figures from 2 to 4 show respective views of the panel according to the invention, in corresponding and different operating conditions.

A control panel according to the invention is made up of a control and display device, preferably through the "touch-control" or "touch screen" technology; therefore, in order to better describe the invention, it will be assumed that said control and display device is an I-PAD type device (trade mark), or similar.

With reference to Fig. 1, said control panel, is connected to a logic control unit 2 which in turn is connected to an actuator 3 apt to produce and maintain a predetermined environmental condition in a closed space.

In order to detect the room temperature, it is provided a suitable temperature sensor 4 apt to detect the temperature in said space, and to transmit this information to the control unit 2, which, in this example, acts as a thermostat.

Said description of course also applies to other types of environmental conditioning systems, such as a system to control the lighting degree of a given space, open as well, wherein the actuator 3 is of course formed by light sources, and sensor 4 is a suitable space light sensor.

Only with the purpose of illustrating the invention better, in the description which follows it is assumed that said environmental condition is the room temperature of a closed space, and that said room temperature is produced by a suitable heating/conditioning means 3, known *per se.*

Figures from 2 to 4 show respective images of the control and display surface of said control panel in various operating states; whereon there are defined different distinct sectors each one of which is adapted to both emit a distinct luminous signal and to detect the contact, typically the touch of the user's finger setting the command.

Said control and display surface comprises two distinct command menus wherein:
- a first menu 10 is formed by a first group of said single distinct sectors 10A, 10B, 10C, 10D... positioned on a circular perimeter "P",
- a second menu 11 formed by a second group of single distinct icons 11 A, 11 B, 11 C, 11 D, 11E, 11F, 11G which are arranged outside said circular perimeter P, are adjacent one to the other, are considerably separate from said first menu, and each one is similar, and in particular identical, to said first menu 10.

Moreover, said icons show miniaturized, that is in particularly small dimensions, the representation of said first menu 10.

As shown, said two menus are comprised in two distinct and respective areas, which do not have parts in common, of said external control and display surface.

As for the single distinct sectors 10A, 10B, 10C, 10D ..., each of them is adapted to:
- emit a light having a selectively different colour,
- wherein all possible and selectable colours on all and on each sector are the same; for example, all sectors can selectively emit a green, blue and red light, but no sector can emit light of any other different colour,
- detect the contact of a finger touching it,
- on the finger touch, the respective sector changes its colour,
- on repeated finger touches the respective sector acquires a progressively different colour among those possible, according to a predetermined and constant order; for ex. first it gets red, then green, then blue, then again red, then green ... and so on, and thus in the same way for all sectors.

Advantageously, in order to highlight the finger touch, the respective sector also increases its area at the moment of the contact, and said area automatically decreases to the previous dimension when the contact stops.

Preferably said sectors are shaped as small rectangles and are radially arranged with respect to said circular perimeter "P", they are adjacent one to the other but separate by respective short intervals 12A, 12B, 12C, 12D... as shown in the figures.

In practice they are arranged as the hour hands in a clock dial.

Further, they are equal one to the other with respect to the respective colour, but they can have different dimensions meaning that all the sectors which show the same colour have the same dimensions, which anyway are different for the sectors which have a different colour.

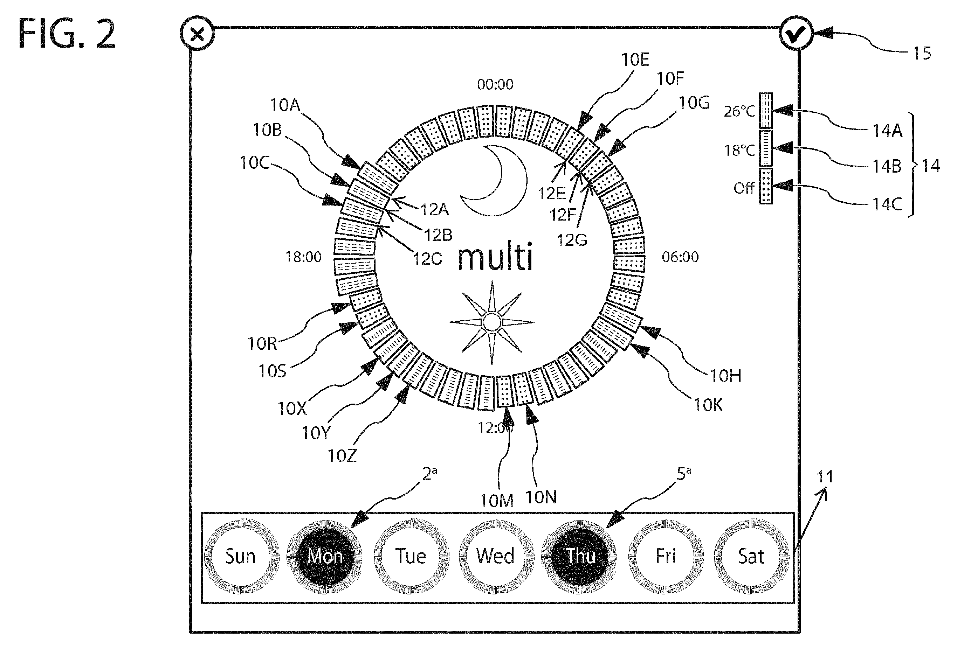

For example, and with reference to Fig. 2:
- sectors 10A, 10B, 10C have the same colour and also the same dimension, and are also equal to sectors 10H, 10K;
- sectors 10E, 10F, 10G are different from the previous ones both in colour and dimensions, they have the same colour and the same dimension, and are also equal to sectors 10X, 10Y and 10Z;
- sectors 10M, 10N are in turn different both in colour and in dimensions from the previous ones, they have the same colour and also the same dimension, and are also equal to sectors 10R and 10S.

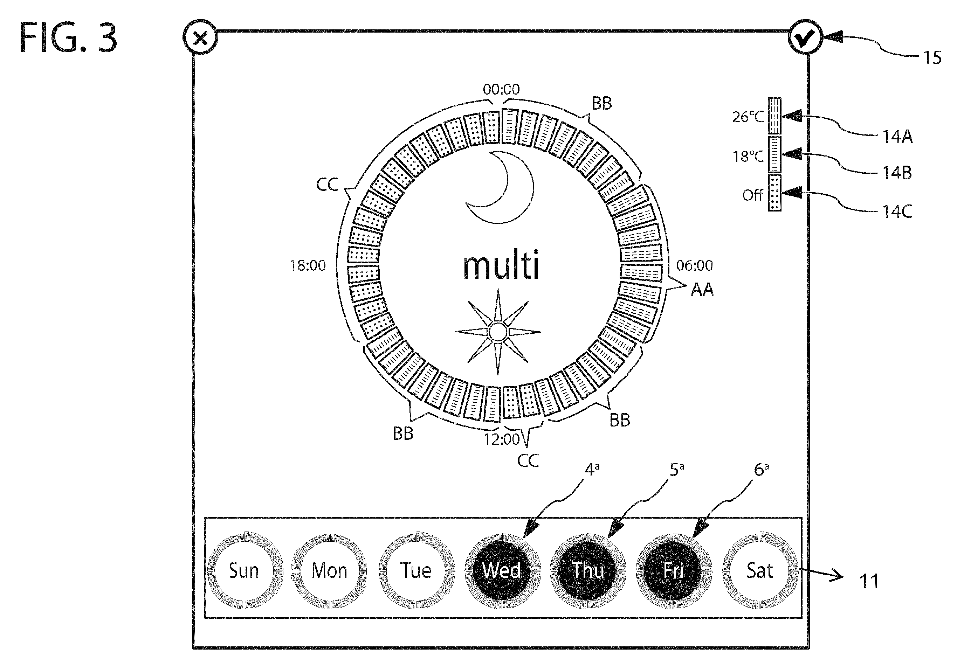

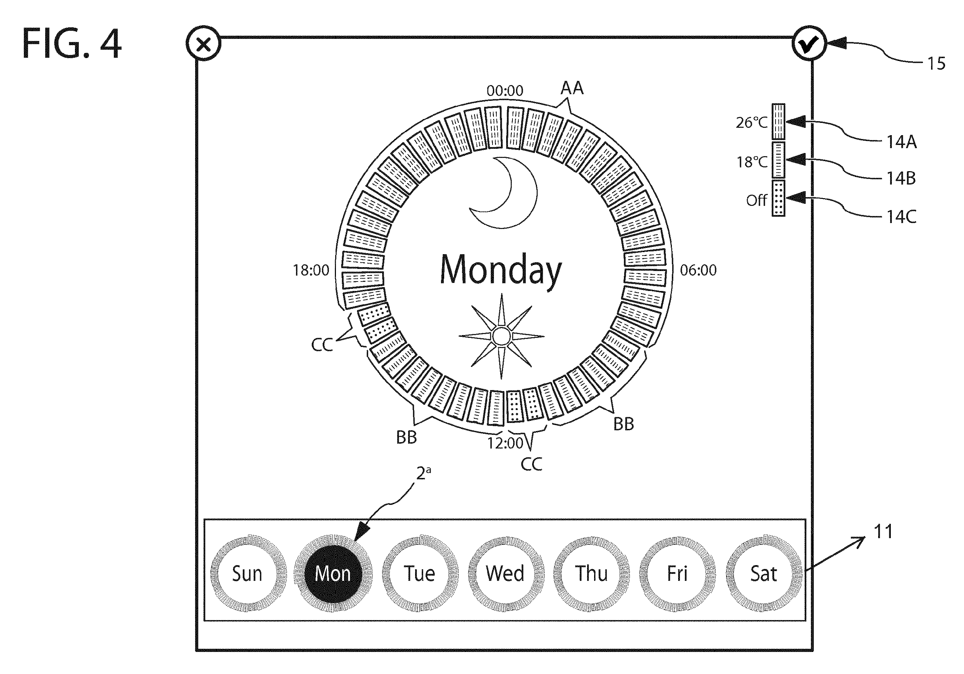

The same considerations are also pertaining in relation with the sectors shown in figures 3 and 4, which show two programmings both different from the programming in Fig. 2.

For the sake of simplicity, in each of said figures 3 and 4, the sectors equal in colour, and therefore also in dimension, have been identified by means of the only three acronyms AA, BB and CC.

All said sectors represent a predetermined time interval, and all the sectors that describe a circumference, represent the 24-hour time frame of one day; therefore each sector shows only a fraction of said 24 hours.

As shown in the drawings, it can be seen that the sectors are 48, and therefore each one of them represents a relative interval of 30 minutes.

Said sectors are associated with a clock or equivalent timer contained in said control unit 2, which measures the current time and selects the sector the time interval containing said current time is associated with.

Therefore one and only one of said distinct sectors is always and automatically selected by said control unit 2.

On that external control surface it is also defined a third area 14, distinct from said first and second menus, and which comprises a plurality of luminous signal areas 14A, 14B, 14C each one of which has its own distinct colour.

Said colours are the same as those which can be selected on said distinct sectors, but it has to be pointed out that said area is not a control menu, that is, if one of said luminous areas 11A, 11 B, 11C is touched, nothing happens in the panel operation since said luminous areas 11 A, 11 B, 11C are not connected to said control unit 2.

Moreover, each of said luminous signal areas 14A, 14B, 14C is associated with a predetermined temperature, preferably written near the respective coloured area.

The temperatures which can be predetermined on a control unit belong in themselves to the known art, and therefore they are not included in the present invention.

The operation of the panel and of the related devices, that is actuator 3 and sensor 4, is such that, when one of the said distinct sectors of said first menu 10 is touched by a finger, automatically said devices get ready to function so that the value of the temperature associated with the colour of that sector, and which has to correspond to the colour of one of said signal areas, automatically becomes the SET POINT of the control variable, or of the environmental condition, which is used by said control unit 2 in order to command said operation of actuator 3 in accordance with the information received from said sensor 4.

Therefore when one of said sectors is touched in succession, finally it is set automatically as the SET POINT of the control variable, or of the environmental condition, the value associated with that luminous signal area of said third area having the same colour as the one acquired by the just touched sector.

This kind of operativeness occurs for all the sectors defined by said first menu 10.

Further, said panel is adapted to carry out also the following operation: if and when it is desired to set the same SET POINT also on the adjacent sectors and successive to the just set sector, then it will be sufficient to carry out the dragging of the contact on the other desired sector from said first sector, meaning for dragging sliding the finger onto the panel surface, without any detachment, until the other desired sectors are reached.

In conclusion, dragging a single sector, it is possible to set immediately and simply the same SET POINT value on an indetermined and as required number of adjacent and successive sectors.

Another improvement of the invention lies in the fact that the area of said distinct sectors increases temporarily during a contact, and goes back to the previous area value after the contact termination.

In order to set in advance the desired environmental condition, or control variable, for all the days of a week, the panel, according to the present invention, is adapted to copy said first menu and the relative setting onto one or more of any of the said single distinct icons 11 A, 11 B, 11C, 11 D, 11E, 11 F, 11 G included in said second menu through a simple contact on the central portion of the respective icon.

Each of said icons represents a day of the week, and in order to better associate each icon with a pre-selected day, each icon is identified by means of a short writing, or abbreviation, which unequivocally identifies the day it is associated with.

The control panel of the invention, and the associated devices 2, 3 and 4, are programmed, made and connected in such a way that the contact on one of these icons causes the automatic copying of the programming, present on the first menu 10, from this one to the touched icon.

This procedure can be carried out for all icons, and therefore the first menu setting is automatically copied on the setting of the icons which have previously been selected, that is, touched.

Moreover, each of said icons is automatically selected by the control unit 2 on the respective day of the week said icon represents.

From this moment onward, the control panel and the associated devices, that is control unit 2, actuator 3 and sensor 4 are activated so that the SET POINT of the controlled environmental condition (temperature/lighting...) is determined automatically, every day of the week, in correspondence with the respective icon according to modalities completely in compliance with what previously described for the first single menu 10.

Advantageously, it can be carried out a so called multiple programming or setting also for the icons since, similarly to what described for the dragging technique concerning the distinct sectors of the first menu, the contact dragging, on the origin icon, toward and onto other icons, also not adjacent, automatically causes the copying of the origin icon and of the related setting in the icons whereon the contact is dragged.

Therefore, it is possible to set or to programme the desired SET POINT of the environmental condition in a distinct day of the week carrying out the only two simple steps of:
- touching the icon corresponding to said distinct day,
- determining the desired programming for that day on said first menu, which has widely been explained previously.

In conclusion, and as an example of the forgoing concerning the possible weekly programming, figures 2, 3 and 4 again give a clear operating example; in fact:
- Fig. 2 shows that, counting from the left, only the first and fifth icons have been selected for the programming by means of the first menu 10.

This can be verified in two different ways:
- the first one consists in verifying that the inner colour of said two icons is clear and anyway very different from the inner colour of the other icons,
- the second way consists in observing that the programming schedule of the same two icons 2a and 5a is exactly the same as the programming schedule of the first menu.

Similar considerations can be made concerning figure 3, which can be seen that icons 4a, 5a and 6a are exactly equal one to the other and to the programming schedule of the first menu, while the other icons are clearly different from these, but also equal one to the other.

On the matter, it can be seen that the programming of icons 4a, 5a and 6a might have been carried out, for example, according to the foregoing, programming only icon 4a and then "dragging" the contact from said icon 4a onto icons 5a and 6a in this way achieving the result of copying the programming of an icon onto the other icons which it is desired to programme in the same way.

Completely similar considerations can be made also for Fig. 4; on this point, it can be seen that the icons of the second menu can be programmed as follows:
- first, icon 1a is programmed and for the sake of simplicity the related programming is dragged on all the other icons;
- then, icon 2a is selected (in fact, it is to note its different colour), and it is programmed in the desired way.

Finally, as a further advantageous improvement of the invention, said control panel is provided with a further small surface sensitive to the contact 15; this, has the purpose of enabling the transmission of the carried out settings to said control unit 2 and in particular of activating the operation of said unit 2 with respect to said actuator 3.

In fact, if such improvement, simple but essential, weren't activated, it would be created the condition that any modification on the first or second menu would give origin to an immediate modification of the operating conditions of actuator 3, which is not so feasible and can be also dangerous for the actuator itself.

In order to avoid such inconvenience, the presence and the functionality of said sensitive surface 15 determine an ordered programming condition and, above all, it determines a useful separation between the programming steps in the strict sense of the word and the execution steps of the programmed settings, as it carries out an essential function and completely similar to that carried out by the "ENTER" key in the personal computers.

## Claims

1. Control and command panel of the touch-control or touch-screen type (1) associated with a regulating device apt to determine and keep a desired environmental condition in a distinct space, and in particular, a thermostat in order to maintain a desired temperature, or an actuator to regulate the lighting degree, and which comprises an external control surface whereon a plurality of distinct single sectors is defined, **characterized in that** it comprises at least two distinct control menus wherein:
- a first menu (10) is formed by a first group of said distinct single sectors (10A, 10B, 10C, 10D, ...) placed on a circular perimeter (P),
- a second menu (11) formed by a second group of distinct single icons (11 A, 11 B, 11C, 11 D, 11E, 11 F, 11 G), which are placed outside said circular perimeter (P), are basically adjacent one to the other, are considerably separate from said first menu, and each one of them is basically similar to, preferably miniaturized, said first menu (10),
- wherein said two menus are comprised in two related distinct areas, not having parts in common, of said external control surface.

2. Control and command panel, according to claim 1, **characterized in that** each of the distinct single sectors (10A, 10B, 10C, 10D, ...) belonging to said first menu (10) is adapted to emit light of different colours.

3. Control and command panel, according to claims 1 or 2, **characterized in that** each of the single distinct sectors (10A, 10B, 10C, 10D, ...) belonging to said first menu (10) is adapted to emit light from surfaces having different areas comprised in the same distinct sector.

4. Control and command panel according to any of the previous claims, **characterized in that** the selection of the colour and the size of the area of said single distinct sectors of said first menu is adapted of being executed by means of a single contact or by means of a sequence of single contacts on the respective distinct sector.

5. Control and command panel according to any of the previous claims, **characterized in that:**
- said external control surface has a third area different from said first and second menu,
- said third area comprises a plurality of signal areas (14A, 14B, 14C), preferably luminous, each of which has its own distinct colour,
- wherein each of said signal areas shows a respective different temperature associated with a respective SET POINT to which said actuator/thermostat can be regulated.

6. Control and command panel according to claim 5, **characterized in that:**
- the colours which can be actuated by means of a contact or by means of a sequence of contacts on said distinct sectors of said first menu are the same as those on said distinct signal areas (14A, 14B, 14C, ...) of said third area (14),
- the selection of a definite colour on said distinct sectors actuates the SET POINT introduction, in said actuator/thermostat, corresponding to the value associated with that signal area having the same colour.

7. Control and command panel according to claim 6, **characterized in that** the dragging of a contact, on one of said distinct sectors, toward and onto other distinct sectors adjacent to it, causes also the introduction of the same SET POINT on said adjacent sectors.

8. Control and command panel according to any of the previous claims, **characterized in that**
- each sector of said first menu is associated with a pre-distinct time interval,
- a timer/clock scans and selects all said time intervals singularly and in succession,
- and the time elapsed measured by said timer/clock causes the change of the SET POINT of said actuator/thermostat toward the SET POINT corresponding to the value of the environment condition (temperature/lighting) associated with that signal area having the same colour as the sector selected by said timer/clock.

9. Control and command panel according to claim 3, **characterized in that** said distinct sectors are adapted to temporarily rise the respective area of coloured light emission according to a relative contact.

10. Control and command panel according to any of the previous claims **characterized in that** the selective contact with each of said distinct sectors (10A, 10B, 10C, 10D, ...) belonging to said first menu (10) is apt to make cyclically changing the light colour respectively emitted.

11. Control and command panel according to any of the claims from 3 onward, **characterized in that** it is adapted to copy said first menu (10) and the related setting onto any of one or more of said single distinct icons (11 A, 11 B, 11C, 11D, 11F, 11G) comprised in said second menu (11) through a contact on the central portion of the related icon.

12. Control and command panel according to claim 11, **characterized in that;**
- each of said icons represents a day of the week,
- each of said icons is selected automatically in correspondence of the respective day of the week which it represents,
- the SET POINT of the controlled room condition (temperature/lighting...) is determined automatically in correspondence of the respective icon according to modalities in compliance with claim 9.

13. Control and command panel according to claim 12, **characterized in that** the setting of the first menu is automatically copied on the setting of the icons which have previously been selected.

14. Control and command panel according to claim 12 or 13, **characterized in that** the dragging of the contact, from on an origin icon, toward and on other icons, also not adjacent, automatically determines the copying of the origin icon and of the relative setting on the icons whereon the contact is dragged.

15. Control and command panel according to one of the claims from 12 onward, **characterized in that** the SET POINT programming of the environmental condition in a specific day of the week comprises the steps of:
- actuating a contact on the icon corresponding to said specific day,
- determining the programming on said first menu according to claim 9.

16. Control and command panel according to any of the previous claims, **characterized in that** the transmission of the programmed instructions from said control panel to said actuator is carried out through a contact on a sensitive defined surface (15) of said external command surface.
